# EUROPEAN PATENT APPLICATION

(11) **EP 2 301 878 A1**
(43) Date of publication of application: **30.03.2011**
(21) Application number: 09171314.9
(22) Date of filing: 25.09.2009
(51) Int. Cl.: B65H 75/14

(54) **Machined spool for winding fine metal wire on**

(71) Applicant: NV Bekaert SA, 8550 Zwevegem (BE)
(72) Inventor: Zhu, Libing, 214434, Jiangyin City (CN)

(57) **Abstract**

A spool for winding fine metal wire on comprises a drum (10) and a pair of flanges (12) made from one piece of forged steel. The flanges (12) have a thickness measured at drum level and a height measured from the outer surface of the drum to the outer rim of the flange, the ratio of height to thickness is larger than 1.5 and smaller than 5.0 and the percentage non-proportional extension of the forged steel is lower than 0.05% at a proof strength of 800 N/mm². The spool has a pair of rigid and strong flanges resisting deformation during repeated use. Its manufacturing cost is cheap and it is relatively lightweight and tough.

## Description

### Technical Field

The present invention relates to a spool on which a fine metal wire is to be wound. More specifically, the present invention relates to a spool made from one piece of forged steel for a fine metal wire, such as a spool for unwinding a filament for making a steel cord in a twisting machine or a spool for winding a sawing wire in a wire saw, or the like.

### Background Art

A fine metal wire to be wound on the spool is, for example, having a diameter of about 0.15 to 0.40 mm which is used as a filament for a steel cord for reinforcement of rubber products, or a sawing wire for a wire saw having a diameter of 0.12 to 0.16 mm or less and is wound on the spool with a predetermined tension (e.g., 0.4 to 1.5 kg). A large winding pressure - or squeezing force - is applied to the winding drum portion due to the winding tension. In addition, when a number of layers of the fine metal wire are wrapped around the spool, a lateral pressure - spreading force - is applied to the flange portions. The winding pressure (squeezing force) and the lateral pressure (spreading force) applied to the winding drum portion and flanges increase more than proportionally with a decrease in the diameter of the wound metal wire, a decrease in the winding pitch, an increase in the winding tension, and an increase in the number of layers of the wound metal wire or any combination of these factors..

On a wire drawing bench, the spool is filled with sawing wire, prior to shipment to a user. The user equips a wire saw device with the spool at the pay-off side of the device. The sawing wire which is led from the pay-off spool, is used for cutting silicon wafers and is wound on a take-up spool at the end. The inventive spool can be used as a take-up as well as a pay-off spool. The spool with the used wire on is returned to the wire producer where the used wire is removed from the spool, the spool is cleaned and refilled with fresh sawing wire. In this way, repeated use of the spool is carried out.

Therefore, the spool on which such a fine metal wire is wound and unwound several times, must have a winding drum portion that needs to have sufficient strength and rigidity against the winding pressure (squeezing force) and expansion caused by the lateral pressure spreading the flanges. Also, the flange portions need to have sufficient strength against the lateral pressure and sufficient rigidity against repeated flexure due to the lateral pressure. Especially the joint portions of the winding drum portion and the flange portions need to resist repeated flexure due to repeated use. The flexure of the flange due to the lateral pressure causes deformation of the winding drum portion, and the deformation of the winding drum portion leads to irregular winding of the wound wire, which may lead to rupture of the wire.

Thus, it is necessary for conventional spools to further increase the thickness of the winding drum portion and the flange portions so as to secure sufficient strength and rigidity, but in some cases, the reinforced flange portions result in a considerable increase in the weight of the spool, leading to a problem with handling, an increase in transportation cost, and also an increase in material cost and machining cost.

JP9-295768A disclosed a spool capable of reducing the weight while securing the strength and rigidity, in which flanges having outwardly protruding reinforcing ribs which are formed on an outer surface by presswork of a high-tensile steel sheet, and a hollow ring-shaped outer edge reinforcing portion which is formed by bending back the outer edge and are fixedly joined to both ends of a winding drum by welding. But when using it repeatedly in severe conditions, the risk that a crack occurs and damages the welded section is real.

JP2003-040529A disclosed a spool with corner parts having a double structure formed in the boundary part between the drum and flanges. The recessed curve surface with a large curvature radius of the recessed corner part allows avoiding or larger reduction of stress concentration at the corner parts. But there is still a problem of poor winding quality at the corner parts.

### Disclosure of Invention

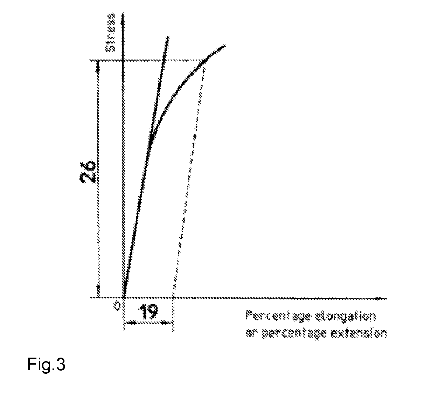

Therefore, an object of the present invention is to provide a spool for a fine metal wire whose drum and flanges being made from one piece of forged steel, the flanges having a thickness measured at drum level, and a height measured from the outer surface of the drum to the outer rim of the flange, the ratio of the height to the thickness is larger than 1.5 and smaller than 5.0 and the percentage non-proportional extension (19) should be lower than 0.05% at a proof strength (26) of 800 N/mm². The numbers in brackets refer to figure 3 of the ISO standard 6892:1998 on "Metallic materials - Tensile testing at ambient temperature" reproduced in Figure 3 of this application.

An alternative way of expressing the requirement that the percentage non-proportional extension should be lower than 0.05% at a proof strength of 800 N/mm², is to say that the proof strength at a non-proportional extension of 0.05% must be larger than 800 N/mm².

To achieve the object, the present invention provides a spool for a fine metal wire comprising a winding drum and flanges made from one piece of forged steel whose percentage non-proportional extension (19) should be lower than 0.05% at a proof strength of 800 N/mm². The ratio of the flange height to the flange thickness is larger than 2.0 and smaller than 3.0.

The favorable steel properties are obtained by using for example a forged chrome molybdenum steel. By preference the spool is oil-quenched after production in order to increase its toughness. The steel has a tensile strength of at least 980 N/mm². Typically, without being limited to this particular composition, such steel comprises a minimum carbon content of 0.30%, a chromium content ranging from 0.60% to 1.20%, a molybdenum content between 0.15 to 0.35%, a manganese content ranging from 0.50% to 0.90%, a silicon content of between 0.10% to 0.40%. All percentages are expressed in weight fractions of the whole.

An alternative equally suitable composition is that of a chrome nickel manganese composition. Such steel comprises a minimum carbon content of 0.30%, a chromium content ranging from 0.60% to 1.00%, nickel in an amount between 1.25% and 2.10%, a molybdenum content between 0.15 to 0.40%, a manganese content ranging from 0.50% to 0.90%, a silicon content of between 0.10% to 0.40%. All percentages are expressed in weight fractions of the whole.

The drum slightly protrudes out of the flanges. At the outer side where the drum meets the flanges a reinforcing portion is provided that gives additional support to the flanges. The portion is oblique to the flat outer surface of the flange and makes an angle of about 135 degree with respect to the substantially flat outer surface of the flange.

Also in this spool, each flange may comprise a pair of guide pins made to protrude on the face of the flange to engage with mating holes in the drive axle of the drawing bench or sawing machine.

Also in this case, a ring-shaped groove lies on the face of each flange in the vicinity of the outer rim of the flange. The groove has a depth of between one fifth and one fourth of said thickness of flanges.

The above described feature makes it possible to improve the strength of the winding drum against a squeezing force when a fine metal wire is wound around the winding drum, and further improve the rigidity and strength of the flange against repeated deformation when the spool is reused. Its manufacturing cost is cheap and it is lightweight when compared to other reusable spools. The toughness and stability of the spool is improved so that it is suitable for at least thirty repeated uses.

The above and other objects, features and advantages of the present invention will become apparent from the following detailed description which is to be read in conjunction with the accompanying drawings.

### Brief Description of Figures in the Drawings

Fig.1 is a vertical cross-sectional view of a spool according to an embodiment (taken along line A-A in Fig.2);

Fig.2 is a front view of the spool of the embodiment;

Fig.3 is proof strength-non-proportional extension (Rp) curve of ISO standard 6892:1998.

### Mode(s) for Carrying Out the Invention

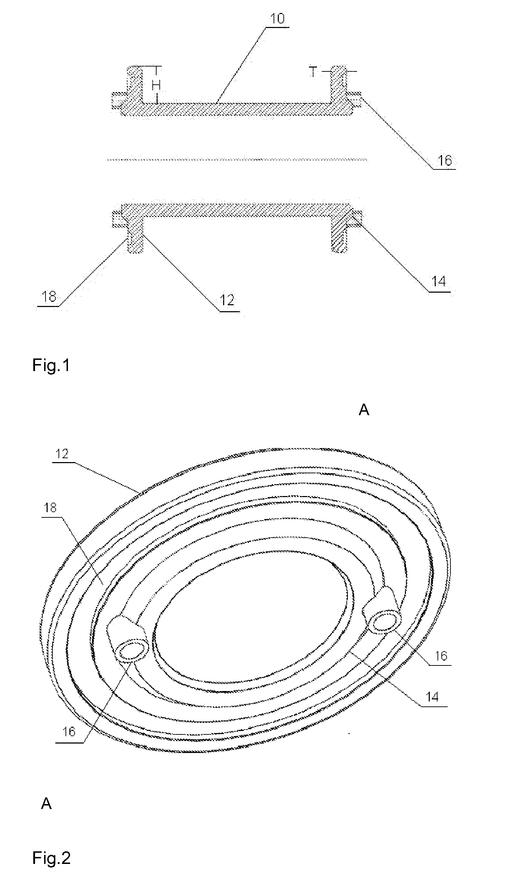

A spool according to an embodiment illustrated in FIGS. 1 and 2 is a spool for a fine metal wire which is used in a drawing machine or a twisting machine for a steel cord, or a wire saw. The spool is composed of a winding drum 10, and flanges 12 and 12 provided at both ends of the winding cylindrical drum 10.

The winding drum 10 and flanges 12 are fabricated by forging made from chrome nickel molybdenum tough hardened steel, for example, AISI 4340.

The thickness 'T' of the flange 12 measured at drum level is 25.0 mm and the height 'H' of the flange 12 measured from the outer surface of the drum to the outer rim of the flange is 62.5 mm, and the ratio of the height to the thickness H/T is 2.5.

The following table illustrates the improvements and benefits of the spool incorporating present invention compared with conventional spools.

Spool 0 Present invention;
Spool 1& Spool 2: Conventional spools.
W: Weight of unused spool;
Do: Distance at the top of the flanges unused spool;
D₁': Distance at the top of the flanges one time full winding;
D₁: Distance at the top of the flanges with no wire after one time use;

| | H/T | W(kg) | D₀ (mm) | D₁'(mm) | D₁ (mm) |
|---|---|---|---|---|---|
| Spool 0 | 2.5 | 50 | 314.9 | 315.5 | 315.1 |
| Spool 1 | 53 | 9.3 | 315.0 | 317.8 | 315.9 |
| Spool 2 | 1.2 | 78 | 300.1 | 300.3 | 300.0 |

Each of the spools can hold approximately 800 km of 0.14 mm sawing wire. The above comparison test discloses that the ratio H/T is critical for the spool. The smaller the ratio H/T, the smaller the deformation of the spool after use, and therefore the more times the spool can be reused. (spool 2 for example). But there should be some limit for the ratio H/T. The lower limit for ratio H/T should be greater than 1.5 because if the ratio H/T is less than 1.5, the flange has an almost square cross section that means the thickness will be too large and the spool becomes too heavy which results in material waste, extra machining cost and transport cost. On the other hand when the ratio is too large, the spool tends to expand too much and is not suitable for reuse (spool 1). Therefore, the ratio H/T is between 1.5 and 5.0, and more preferably, between 2.0 and 3.0.

The spool can for example be made out of AISI 4340 steel which has a percentage non-proportional extension lower than 0.05% at a proof strength of 800 N/mm².

The flanges 12 and on the inner edge of 12 is, for example, each composed of a reinforcing portion 14 having a structure which is oblique to the flat outer surface of the flange and making an angle of about 135 degree with respect to the substantially flat outer surface of the flange. Being provided at an inner position, the reinforcing portion 14 overlaid on the flange 12 formed by forging chrome nickel molybdenum tough hardening steel, for example, AISI 4340.

The joint portions of the winding drum portion and the flange portions where the maximum stress occurs requires means for reinforcing as the above mentioned reinforcing portion. When the spool is used in severe conditions, especially for repeated use, the reinforcing portion 14 provides additional prevention that the flanges will spread.

After rough finishing the outside surface of the spool, a fine finish of the whole is carried out on a lathe. After finishing, a pair of guide pins 16 adapted to engage with the wire saw drive spindle is processed on the axial center outside the inner side of the flanges 12.

A ring-shaped groove 18 is formed at the outer edge portion of each flange 12 in a flange circumferential direction by press forming. The groove has a depth of between one fifth and one fourth of said thickness of flanges. For example, if the thickness of the flanges is 20 mm, the depth of the groove is 4 mm to 5 mm. Because the groove lies on the outer face of each flange in the vicinity of the outer rim of the flange, it does not play a negative role in the deformation of the flanges but reduces the weight. On the other hand, it is easy for operators to lift the spool up and down with a clamp engaging into the groove. If there was no such a groove for lifting, the outer surface of the flanges would be used for lifting. After repeated use, the outer surface of the flanges would be getting more and more damaged and a deformation of the flanges would occur.

It is possible to use chrome nickel molybdenum tough hardening steel other than AISI 4340, other alloy steel, or carbon steel satisfying that the percentage non-proportional extension should be lower than 0.05% at a proof strength of 800 N/mm². A heat annealing treatment of the spool to stress relieve the spool is not sufficient to make the spool tough. Also an oil-quenching treatment is needed in order to obtain the desired toughness properties of the steel.

Surface treatments, such as blackening and metal plating (for example, nickel plating), may be performed to the above-mentioned spool surface, for preventing rust formation such that the useful life of the spool can be prolonged.

## Claims

1. A spool for winding fine metal wire on comprising a drum and a pair of flanges, said drum and flanges being made from one piece of forged steel, said flanges having a thickness measured at drum level, said flanges having a height measured from the outer surface of the drum to the outer rim of the flange **characterized in that**
the ratio of said height to said thickness is larger than 1.5 and smaller than 5.0 and the percentage non-proportional extension is lower than 0.05% at a proof strength of 800 N/mm².

2. A spool as claimed in claim 1, **characterized in that** the ratio of said height to said thickness is larger than 2.0 and smaller than 3.0.

3. A spool as claimed in claim 2, **characterized in that** the flange inner edge reinforcing portion has a structure which is oblique to the flat outer surface of the flange and makes an angle of about 135 degree with respect to the substantially flat outer surface of the flange.

4. A spool as claimed in claim 3, **characterized in that** a pair of guide pins made to protrude on the face of said flange engage with the working machine.

5. A spool as claimed in claim 4, **characterized in that** a ring-shaped groove lies on the face of each flange in the vicinity of the outer rim of the flange in a flange circumferential direction.

6. A spool as claimed in claim 5, **characterized in that** said groove has a depth of between one fifth and one fourth of said thickness of flanges.

7. A spool as claimed in any of the preceding claims, **characterized in that** the raw material of said spool is chrome nickel molybdenum tough hardened steel.

8. A spool as claimed in claim 7, **characterized in that** annealing and oil-quenching are given as heat treatment to said steel.
